# EUROPEAN PATENT APPLICATION

(11) **EP 4 664 958 A1**
(43) Date of publication of application: **17.12.2025**
(21) Application number: 24774077.2
(22) Date of filing: 18.03.2024
(51) Int. Cl.: H04W 12/106

(54) **DATA PROCESSING METHOD AND APPARATUS, NETWORK SIDE DEVICE AND TERMINAL DEVICE**

(30) Priority: 20.03.2023 CN 202310281375
(71) Applicant: Vivo Mobile Communication Co., Ltd., Dongguan, Guangdong 523863 (CN)
(72) Inventor: BAO, Wei, Dongguan, Guangdong 523863 (CN); ZHENG, Qian, Dongguan, Guangdong 523863 (CN); XIE, Zhenhua, Dongguan, Guangdong 523863 (CN)
(74) Representative: Murgitroyd & Company
(86) International application number: PCT/CN2024/082242
(87) International publication number: WO 2024/193512

(57) **Abstract**

This application discloses a data processing method and apparatus, a network-side device, and a terminal device, and belongs to the field of communication technologies. The data processing method in embodiments of this application includes: a sending end sends a first packet to a receiving end, where the first packet carries a first indication, the first indication indicates whether the first packet is integrity protected, and the first indication is a ciphertext, or the first indication is an integrity-protected ciphertext.

## Description

### CROSS-REFERENCE TO RELATED APPLICATION

This application claims priority to Chinese Patent Application No. 202310281375.9 filed in China on March 20, 2023, which is incorporated herein by reference in its entirety.

### TECHNICAL FIELD

This application relates to the field of communication technologies, and specifically, to a data processing method and apparatus, a network-side device, and a terminal device.

### BACKGROUND

In a new radio (New Radio, NR) network and a long term evolution (Long Term Evolution, LTE) network, a packet data convergence protocol (Packet Data Convergence Protocol, PDCP) layer provides security (including integrity protection (verification) and encryption (decryption)) functions. In the NR, a terminal supports an extremely high data rate (data rate). If a packet is not encrypted and/or integrity protected by a terminal device, the sent packet may be easily leaked or tampered with by an attacker.

### SUMMARY

Embodiments of this application provide a data processing method and apparatus, a network-side device, and a terminal device, to resolve a problem of relatively large overheads for encryption and/or integrity protection of a sending end.

According to a first aspect, a data processing method is provided, including:
sending, by a sending end, a first packet to a receiving end, where the first packet carries a first indication, the first indication indicates whether the first packet is integrity protected, and the first indication is a ciphertext, or the first indication is an integrity-protected ciphertext.

According to a second aspect, another data processing method is provided, including:
receiving a first packet by a receiving end, where the first packet carries a first indication, the first indication indicates whether the first packet is integrity protected, and the first indication is a ciphertext, or the first indication is an integrity-protected ciphertext;
determining, by the receiving end based on the first indication, whether the first packet is not integrity protected; and
performing, by the receiving end, integrity protection verification on the first packet in a case that the first packet is integrity protected.

According to a third aspect, a data processing apparatus is provided, including:
a first sending module, configured to send a first packet to a receiving end, where the first packet carries a first indication, the first indication indicates whether the first packet is integrity protected, and the first indication is a ciphertext, or the first indication is an integrity-protected ciphertext.

According to a fourth aspect, another data processing apparatus is provided, including:
a packet receiving module, configured to receive a first packet, where the first packet carries a first indication, the first indication indicates whether the first packet is integrity protected, and the first indication is a ciphertext, or the first indication is an integrity-protected ciphertext;
a first determining module, configured to determine, based on the first indication, whether the first packet is not integrity protected; and
a verification module, configured to perform integrity protection verification on the first packet in a case that the first packet is integrity protected.

According to a fifth aspect, a terminal device is provided. The terminal includes a processor and a memory. The memory stores a program or instructions executable on the processor, and when the program or the instructions are executed by the processor, steps of the method according to the first aspect are implemented, or steps of the method according to the second aspect are implemented.

According to a sixth aspect, a network-side device is provided, including a processor and a memory. The memory stores a program or instructions executable on the processor, and when the program or the instructions are executed by the processor, steps of the method according to the first aspect are implemented, or steps of the method according to the second aspect are implemented.

According to a seventh aspect, a data processing system is provided, including a network-side device and a terminal device. The network-side device may be configured to perform steps of the data processing method according to the first aspect, and the terminal device may be configured to perform steps of the data processing method according to the second aspect; or the network-side device may be configured to perform steps of the data processing method according to the second aspect, and the terminal device may be configured to perform steps of the data processing method according to the first aspect.

According to an eighth aspect, a readable storage medium is provided. The readable storage medium stores a program or instructions, and when the program or the instructions are executed by a processor, steps of the method according to the first aspect are implemented, or steps of the method according to the second aspect are implemented.

According to a ninth aspect, a chip is provided. The chip includes a processor and a communication interface. The communication interface is coupled to the processor. The processor is configured to run a program or instructions, to implement the method according to the first aspect, or implement the method according to the second aspect.

According to a tenth aspect, a computer program/program product is provided. The computer program/program product is stored in a storage medium. The computer program/program product is executed by at least one processor, to implement steps of the method according to the first aspect or the second aspect.

In embodiments of this application, in a case of not performing integrity protection on all parts of the packet, the sending end may indicate the integrity protection status of the packet to the receiving end through encryption or by using the first indication that is both encrypted and integrity protected. An attacker cannot determine whether the first packet is integrity protected, nor can determine integrity-protected data content, and can only randomly tamper with the obtained packet. In embodiments of this application, difficulty in tampering with the packet is increased. In addition, once the attacker has tampered with the packet, the receiving end can identify a tampered packet by performing decryption on the first indication and by performing integrity protection verification on the first packet, to reduce computing overheads for encryption and/or integrity protection of the sending end while ensuring data transmission security.

### BRIEF DESCRIPTION OF DRAWINGS

FIG. 1 is a block diagram of a wireless communication system to which an embodiment of this application is applicable;
FIG. 2 is a diagram of a user plane protocol stack in a 5G cellular mobile communication system;
FIG. 3 is a diagram of a control plane protocol stack in a 5G cellular mobile communication system;
FIG. 4 is a diagram of a format of a PDCP packet;
FIG. 5 is a flowchart of a data processing method according to an embodiment of this application;
FIG. 6 is a diagram of a format of a PDCP PDU packet according to an embodiment of this application;
FIG. 7 is a diagram of a format of another PDCP PDU packet according to an embodiment of this application;
FIG. 8 is a flowchart of another data processing method according to an embodiment of this application;
FIG. 9 is a block diagram of a structure of a data processing apparatus according to an embodiment of this application;
FIG. 10 is a block diagram of a structure of another data processing apparatus according to an embodiment of this application;
FIG. 11 is a block diagram of a structure of a communication device according to an embodiment of this application;
FIG. 12 is a block diagram of a structure of a terminal device according to an embodiment of this application;
FIG. 13 is a block diagram of a structure of a network-side device according to an embodiment of this application; and
FIG. 14 is a block diagram of a structure of another network-side device according to an embodiment of this application.

### DESCRIPTION OF EMBODIMENTS

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application fall within the protection scope of this application.

In the specification and claims of this application, the terms "first", "second", and the like are intended to distinguish similar objects, but are not necessarily used to describe a specific order or sequence. It should be understood that terms used in such a way are interchangeable in proper circumstances, so that embodiments of this application described herein can be implemented in an order different from the order illustrated or described herein. In addition, the objects distinguished by "first" and "second" are usually one category, and a quantity of objects is not limited. For example, the first object may be one or more. In addition, the term "and/or" used in this specification and the claims represents at least one of connected objects. The character "/" usually indicates an "or" relationship between associated objects.

It is worth noting that, the technology described in embodiments of this application is not limited to being applied to an LTE/LTE-advanced (LTE-Advanced, LTE-A) system, and may be applied to another wireless communication system, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" are often interchangeably used in embodiments of this application, and the technology described may be used for both the system and radio technology mentioned above, and used for another system and radio technology. The following description describes an NR system for purposes of example, and the term of NR is used in most of the descriptions below, but these technologies are also applicable to an application beyond an NR system application, for example, a 6^{th} generation (6^{th} Generation, 6G) communication system.

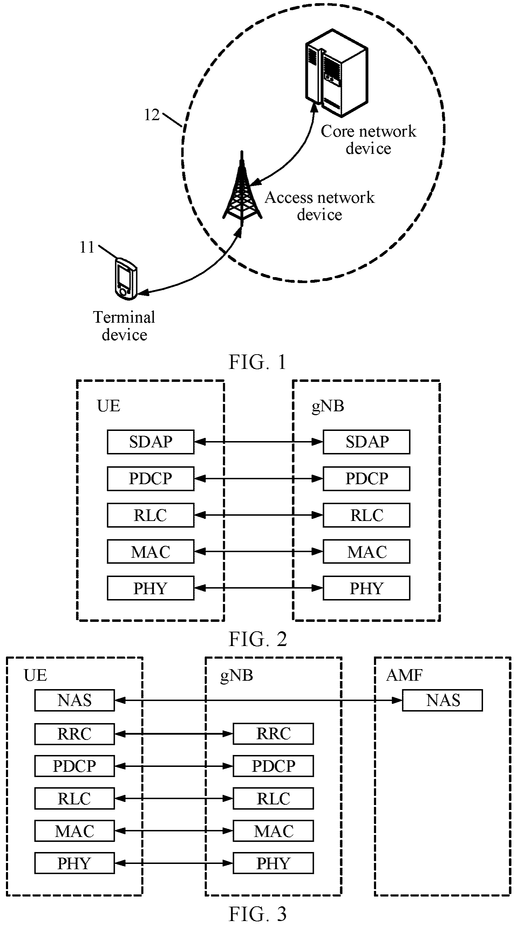

FIG. 1 is a block diagram of a wireless communication system to which an embodiment of this application is applicable. The wireless communication system includes a terminal device 11 and a network-side device 12. The terminal device 11 may be a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), an in-vehicle device (VUE), a pedestrian terminal (PUE), a smart home (home devices with a wireless communication function, such as a refrigerator, a television, a washing machine, furniture, or the like), a game console, a personal computer (personal computer, PC), a teller machine, a self-service machine, or another terminal-side device. The wearable device includes a smart watch, a smart band, smart headphones, smart glasses, smart jewelry (a smart bracelet, a smart wristband, a smart ring, a smart necklace, a smart anklet, a smart chain anklet, or the like), a smart wrist strap, smart clothing, and the like. It should be noted that, a specific type of the terminal device 11 is not limited in embodiments of this application. The network-side device 12 may include an access network device or a core network device. The access network device 12 may alternatively be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another proper term in the art. As long as the same technical effects are achieved, the base station is not limited to a specific technical vocabulary. It should be noted that, only a base station in an NR system is used as an example for description in embodiments of this application, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that, only a core network device in an NR system is used as an example for description in embodiments of this application, and a specific type of the core network device is not limited.

Data encryption means that a sending end generates a password (bit) stream based on an encryption input parameter (including: a sequence number of a packet, a key, a sending direction, and the like), performs an operation (for example, performs an exclusive OR operation on a corresponding bit) by using the password (bit) stream and an original plaintext data stream (bit stream), to obtain an encrypted data stream; and after receiving the encrypted data stream, a receiving end obtains a decrypted data stream based on a reverse operation of the sending end.

Integrity protection means that a bit stream, for example, message authentication code for integrity (Message Authentication Code for Integrity, MAC-I) with a preset length (for example, 32 bits) is obtained based on an input parameter (including: a sequence number of a packet, a key, to-be-integrity-protected data, and the like). Any change of the input parameter may cause a change of an output MAC-I. The sending end sends the MAC-I (referred to as MAC-I-A below) together with the integrity-protected data, and after receiving the MAC-I and the data, the receiving end obtains MAC-I (referred to as MAC-I-B below) through computation based on the integrity-protected data. The receiving end compares the received MAC-I-A with the MAC-I-B calculated by the receiving end. In a case that the MAC-I-A and the MAC-I-B are the same, it is considered that the integrity-protected data is sent by an expected sending end and has not been tampered with (it is assumed herein that an attacker does not have a key, and therefore, after the data is tampered with, MAC-I matching the tampered data cannot be generated), that is, an integrity protection check (or referred to as "integrity protection verification") succeeds.

FIG. 2 shows a user plane protocol stack in a 5th generation mobile communication technology (5th Generation Mobile Communication Technology, 5G) cellular mobile communication system; and FIG. 3 shows a control plane protocol stack in a 5G cellular mobile communication system. As shown in FIG. 2 and FIG. 3, a PDCP layer of a sending end (a terminal device or a network-side device) is responsible for performing encryption and/or integrity protection on higher layer signaling and data; and a PDCP layer of a receiving end (a network-side device or a terminal device) is responsible for performing decryption and/or integrity protection verification on data received from a lower layer. In a case that an integrity protection (verification) function is enabled, the PDCP of the receiving end submits, to a higher layer, processed signaling and data on which the integrity protection verification processing succeeds. In a case that an integrity protection (verification) function is not enabled, the PDCP of the receiving end does not perform an integrity protection verification operation, and directly submits, to a higher layer, signaling and data that have been processed (at least including an operation of removing a PDCP header, and optionally including a decryption operation (in a case that an encryption operation is performed by the sending end)).

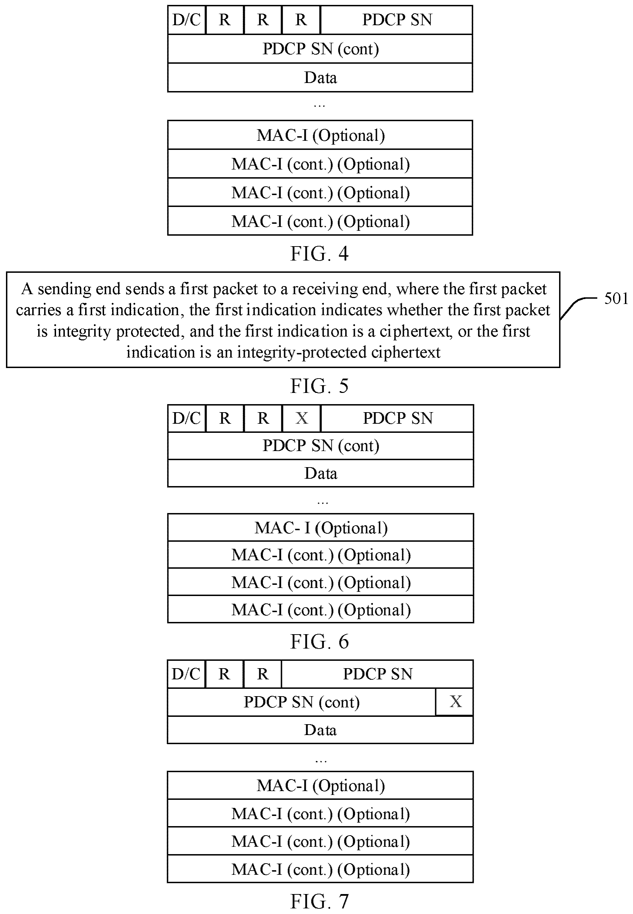

In the related technology, a protocol data unit (Protocol Data Unit, PDU) format (including: a header + data (that is, a payload) + a trailer (that is, MAC-I)) of a data resource bearer (Data Radio Bearer, DRB) PDCP data (Data) is shown in FIG. 4. A network configures whether to enable integrity protection (that is, the MAC-I field is optional) for each DRB. In a case that integrity protection is enabled for a DRB, the sending end carries MAC-I for each packet (PDCP PDU) corresponding to the DRB, and a corresponding receiving end needs to check the MAC-I. Otherwise, the PDCP PDU sent by the sending end do not carry the MAC-I, and the receiving end does not check the MAC-I of the received PDCP PDU.

Encryption and integrity protection (calculating the MAC-I) are performed by consuming some computing resources of a sending end; and similarly, decryption and integrity protection verification are also performed by consuming some computing resources of a receiving end.

A transmission data rate (data rate) of the 5G and a future communication system is extremely high. In a case that encryption and integrity protection are performed on each packet, significant load on some low-end devices is caused.

It is proposed in the related technology that an indication (referred to as an X field below) indicating whether the PDCP PDU is encrypted and/or integrity protected is carried in a header of a PDCP PDU. However, the introduction of the indication enables an attacker to identify specific PDCP PDUs on which encryption and/or integrity protection has been performed and specific PDCP PDUs on which encryption and/or integrity protection has not been performed. Exposure of the information enables the attacker to attack the PDCP PDU on which encryption and/or integrity protection has not been performed, for example, eavesdrop on data that is not encrypted, or tamper with data that is not integrity encrypted.

In addition, there is another defect in the solution. The attacker may generate a packet with a specified SN, for example, SN = M. In addition, it indicates, by using the X field, that the PDCP PDU is not integrity protected or encrypted, and the PDCP PDU is sent to the receiving end. The receiving end considers that the PDCP PDU is from a real sending end by default (since no MAC-I is carried for verification of the receiving end), and submits the PDCP PDU to a higher layer after processing. After the receiving end receives the forged packet, in a case that the receiving end receives a PDCP PDU with SN = M that is sent by the real sending end, the receiving end considers that the PDCP PDU is repeatedly received, and discards the PDCP PDU sent by the real sending end. In this way, the attacker completes the attack.

An embodiment of this application provides a data processing method, to reduce computing overheads for encryption and/or integrity protection of a sending end. A data processing method according to embodiments of this application is described in detail below by using some embodiments and application scenarios thereof with reference to the accompanying drawings.

According to a first aspect, an embodiment of this application provides a data processing method. FIG. 5 is a flowchart of a data processing method according to an embodiment of this application. This method is applied to a terminal device. As shown in FIG. 5, the method may specifically include:
Step 501: A sending end sends a first packet, where the first packet carries a first indication, the first indication indicates whether the first packet is integrity protected, and the first indication is a ciphertext, or the first indication is an integrity-protected ciphertext.

It should be noted that, the sending end in this application may be a terminal device, or may be a network-side device. Specifically, in a case that the sending end is a terminal device, the receiving end is a network-side device; or in a case that the sending end is a network-side device, the receiving end is a terminal device.

In this embodiment of this application, an X field may be introduced to a header of a packet. The X field includes a first indication, and the first indication indicates whether the first packet is integrity protected. In addition, the first indication in the X field may be encrypted, and the obtained first indication is a ciphertext. Alternatively, the first indication in the X field may be integrity protected and encrypted, and the obtained first indication is an integrity-protected ciphertext.

Further, the sending end may perform integrity protection on a payload (payload) of the first packet, and notify the receiving end, by using the first indication, whether the payload part of the packet is integrity protected.

Optionally, a protocol stack/protocol layer of the sending end includes a higher layer and a target protocol layer, the target protocol layer is used for setting the first indication, and the higher layer is a protocol layer above the target protocol layer in the protocol stack/protocol layer of the sending end.

The target protocol layer is a protocol layer, in the protocol stack/protocol layer of the sending end, used for providing functions related to data security, such as encryption, integrity protection, and the like. The target protocol layer may be any one of a PDCP layer, a radio resource control (Radio Resource Control, RRC) layer, a media access control (Media Access Control, MAC) layer, and the like.

In an example, a higher layer notifies a target protocol layer of specific higher layer packets on which the integrity protection and/or encryption need to be performed. The higher layer may be an application layer, a non-access stratum (Non-access stratum, NAS), an RRC layer, or the like.

Usually, the target protocol layer of the sending end sets the first indication and performs integrity protection on the packet, that is, generates the first packet, and the payload of the first packet refers to a higher layer packet. In an example, the first packet includes a header and a payload (a higher layer packet), and the first indication is usually in the header of the first packet.

The first packet in this embodiment of the application may be a PDCP layer packet, that is, a PDCP PDU. FIG. 6 and FIG. 7 separately show two formats of a PDCP PDU packet.

In a possible application scenario, a processing process between a sending end and a receiving end is as follows:

1. The sending end determines that integrity protection ("integrity protection" for short below) needs to be performed on a PDCP SDU, adds a PDCP header, sets an X field, and generates MAC-I.

2. The sending end encrypts a relevant field in the PDCP PDU. The encrypted part includes: the X field, and optionally, includes one or more of a payload/a part of the PDCP SDU (other than an SDAP header/SDAP control PDU), MAC-I, and the like, and is used as an input plaintext for encryption.

3. The receiving end decrypts the X field, determines, based on a value of the X field, whether the PDCP SDU in the PDCP PDU is integrity protected, and performs integrity protection verification ("integrity protection verification" for short below) on the integrity-protected part.

In a case that the X field is integrity protected, and an attacker tampers with the X field or generates the X field by the attacker, the receiving end detects the case.

It may be understood that, in a case that the sending end performs integrity protection on any part (including the payload or the X field) of the first packet, the first packet may include the MAC-I. Usually, the MAC-I is in the trailer of the first packet. Without a decryption key, the attacker cannot decrypt the X field. Therefore, the attacker cannot know whether the payload part of the packet is integrity protected, and can only randomly tamper with the monitored packet. In a case that the integrity-protected part of the integrity-protected packet is just tampered with, after the receiving end receives the integrity-protected packet, the integrity protection check fails, so that the attacker is identified, and a corresponding operation is performed, for example, notifying the sending end to resend the tampered packet, or notifying the sending end to lower a sending speed, to ensure that 100% integrity protection is performed on the sent packet, and the like.

According to the data processing method provided in this embodiment of this application, the sending end may protect the packet from being tampered without performing integrity protection on payload parts of all sent packets, to facilitate the receiving end to identify the tampered packet, and reduce computing overheads for encryption and/or integrity protection of the sending end while ensuring data transmission security.

Optionally, before the sending end sends the first packet to the receiving end, the method further includes: generating, by the sending end, the first packet based on first configuration information.

The first configuration information includes at least one of the following:
a second indication, where the second indication indicates a configuration ratio of an integrity-protected packet in packets corresponding to a preset sending window of the sending end;
a third indication, where the third indication indicates a format of the first packet; or
a fourth indication, where the fourth indication indicates whether to perform integrity protection on the first indication.

It should be noted that, the configuration ratio includes a quantity ratio and/or a data volume ratio. The quantity ratio = a quantity of integrity-protected packets/a quantity of packets corresponding to a preset sending window of the sending end. The preset sending window may be set by the sending end, or may be stipulated in a protocol. The preset sending window indicates a period of time, and the packets sent by the terminal device in the preset window include an integrity-protected packet and a packet that is not integrity-protected. For example, in a case that a ratio of a quantity of integrity-protected packets in the packets corresponding to the preset sending window of the sending end is 30%, each time the sending end sends 100 packets, integrity protection needs to be performed on (at least) 30 packets. The data volume ratio = a sum of data volumes of integrity-protected packets/a sum of data volumes of the packets corresponding to the preset sending window of the sending end. For example, in a case that a data volume ratio of integrity-protected packets in the packets corresponding to the preset sending window of the sending end is 30%, each time the sending end sends a packet of 100M bytes, integrity protection needs to be performed on the packet of (not less than) 30M bytes.

The third indication indicates a format of the first packet, for example, a format of a PDCP PDU. For example, a length of the X field may be set, and different lengths of the X field result in different formats of the packet.

It may be understood that, the first configuration information may be configured by one of the sending end and the receiving end, or may be negotiated by the sending end and the receiving end. In an example, the terminal device is a sending end, and the network-side device is a receiving end. The network-side device generates the first configuration information and sends the first configuration information to the terminal device. The terminal device generates and sends the first packet based on the received first configuration information. Alternatively, the terminal device is a receiving end, and the network-side device is a sending end. The network-side device generates the first configuration information, then generates the first packet based on the first configuration information, and sends the first packet to the terminal device. After receiving the first configuration information and the first packet, the terminal device performs integrity protection verification and/or decryption on the received first packet.

For example, in a case that it is determined through negotiation or configuration that "the X field needs to be integrity protected" (that is, the first indication needs to be integrity protected), and the attacker generates a forged packet with SN = M, and it indicates in the X field that the payload of the packet does not need to be integrity protected, the receiving end may perform integrity protection verification on the X field, to identify that the packet is not generated by a real sending end or is tampered with after being generated, and perform a corresponding operation.

Optionally, the first indication indicates that the first packet is integrity protected, and before sending, by the sending end, the first packet to the receiving end, the method further includes the following steps.

Step S11: The sending end generates a first message authentication code based on an input parameter of a to-be-protected packet.

Step S12: The sending end generates a second packet based on the first message authentication code, the first indication, and the packet.

Step S13: The sending end performs encryption processing on a first parameter of the second packet, to obtain a first packet.

The first parameter includes at least one of the following:
the first indication;
a payload of the second packet; or
the first message authentication code.

It may be understood that, the to-be-protected packet is usually a higher layer packet, and the input parameter is an input parameter of the higher layer packet, and may specifically include a sequence number of the packet, a key, to-be-integrity-protected data, and the like.

The second packet includes a header, a to-be-protected packet (that is, a higher layer packet), and first message authentication code MAC-I. The first indication is filled into the header of the second packet, and the first message authentication code is filled into the trailer of the second packet.

In a case that the second packet is encrypted, at least one of the first indication, the payload (that is, the higher layer packet), and the first message authentication code in the second packet may be encrypted, to obtain the first packet in this embodiment of this application.

It should be noted that, a computing amount of integrity protection is related to a length of integrity-protected data. Therefore, in this embodiment of this application, a smaller computing amount can be introduced by performing the integrity protection on only the first indication than by performing the integrity protection on the payload of the second packet.

Optionally, the first indication indicates whether the first packet is integrity protected, including at least one of the following that:
the first indication indicates whether a payload of the first packet is encrypted; or
the first indication indicates whether a payload of the first packet is integrity protected.

In an embodiment of this application, a value of the first indication indicates whether the payload of the first packet is encrypted, not encrypted, integrity protected, not integrity protected, encrypted and integrity protected, not encrypted and not integrity protected, or the like.

Optionally, a data length of the first indication is N bits, the first indication has M values, M = 2^{N}, and N is a positive integer and N is greater than 1; and
in a case that a value of the first indication is a first preset value, the first indication indicates that the first packet is integrity protected, and the first preset value includes any one of (M-1) preset values of the first indication; or
in a case that a value of the first indication is a second preset value, the first indication indicates that the first packet is not integrity protected, and the second preset value is one preset value in the M values of the first indication.

It is assumed that the data length of the first indication is 1 bit, the ciphertext generated after encrypting the first indication may still be 1 bit. In a case that an attacker has tampered with the encrypted first indication, for example:
Step 1: The sending end sets the first indication to 0, indicating that integrity protection is required, and calculates MAC-I;
Step 2: The sending end encrypts the first indication. After encryption, the first indication takes a value of 1;
Step 3: The attacker has tampered with the first indication and changed the encrypted first indication to 0; and
Step 4: The receiving end decrypts the tampered first indication and obtains the original value of the tampered first indication as 1.

In this case, the receiving end mistakenly considers that the sending end has not performed integrity protection on the packet, decrypts the packet (it is assumed herein that the packet needs to be encrypted based on an existing mechanism), and directly submits the decrypted packet to a higher layer. That is, the receiving end does not detect the tampered packet.

To avoid this case, the data length of the first indication may be extended to N bits (for example, N = 4). Only one preset value (for example, 0000) represents that integrity protection is not performed; and other 15 values all represent that integrity protection is performed.

In a case that the attacker has tampered with the encrypted first indication, there is only a 1/16 (that is, 1/2^{N}) probability that the tampered first indication indicates that the packet is not integrity protected, to reduce the probability that the receiving end fails to detect the tampered packet.

In a case that the attacker has tampered with the encrypted first indication, the receiving end has a 15/16 probability of detecting the tampered first indication indicating that the packet is integrity protected. In this way, the receiving end can detect that the packet has been tampered with.

Alternatively, the first indication is extended to N bits (for example, N = 4). Only one preset value (for example, 0000) represents that integrity protection is not performed; only one preset value (for example, 1111) represents that integrity protection is performed; and other 14 values all represent that the packet is tampered with (or are non-expected values).

In a case that the attacker has tampered with the encrypted first indication, there is only a 1/16 (that is, 1/2^{N}) probability that the tampered first indication indicates that the packet is not integrity protected, to reduce the probability that the receiving end fails to detect the tampered packet.

In a case that the attacker has tampered with the encrypted first indication, the receiving end has a 14/16 (that is, (2^{N}-2)/2^{N}) probability of detecting that the tampered first indication is an invalid value, representing the tampered value.

In this case, the attacker has tampered with the encrypted first indication, and there is only 1/16 (that is, 1/2^{N}) probability that the tampered first indication just indicates that the packet is integrity protected. In this case, the receiving end can determine that the packet has been tampered with through MAC-I verification.

In a case that the first indication is integrity protected, even if the first indication is 1 bit, any tampering may still be found. Therefore, in a case that the first indication is integrity protected, the data length of the first indication does not need to be extended.

Optionally, before generating, by the sending end, the first packet based on the first configuration information, the method further includes the following steps.

Step S21: The sending end sends second information to the receiving end.

Step S22: The sending end receives the first configuration information sent by the receiving end.

The first configuration information is generated based on the second information; and
the second information includes at least one of the following:
a first parameter, where the first parameter indicates an integrity protection capability of the sending end;
a second parameter, where the second parameter indicates an integrity protection verification capability of the sending end;
a third parameter, where the third parameter indicates an encryption capability of the sending end; or
a fourth parameter, where the fourth parameter indicates a decryption capability of the sending end.

In an example, the sending end and the receiving end may negotiate to configure the first configuration information. For example, the terminal device is a sending end, and the network-side device is a receiving end. The terminal device may notify the network-side device of sending capability information of the terminal device by sending the second information, including at least one of an integrity protection capability, an integrity protection verification capability, an encryption capability, and a decryption capability. The network-side device generates the first configuration information based on the second information, and sends the first configuration information to the terminal device. The terminal device generates and sends the first packet based on the first configuration information.

Optionally, the method further includes:
Step S31: The sending end receives a first message, where the first message indicates that the integrity protection verification on the first packet has failed or has not passed;
Step S32: The sending end resends the first packet to the receiving end; and/or
Step S33: The sending end adjusts a sending speed of the packet and performs integrity protection on another to-be-sent packet.

In this embodiment of this application, the receiving end performs integrity protection verification on the packet received by the receiving end, and sends the first message to the sending end in a case that the integrity protection verification on the packet has failed or has not passed, to notify a packet on which the integrity protection verification has failed or has not passed. The sending end may resend, after receiving the first message, the packet on which the integrity protection verification has failed or has not passed, and/or lower a sending speed of the packet, perform integrity protection on all other to-be-sent packets, or the like.

Optionally, the first message carries a sequence number of the packet on which the integrity protection verification has failed or has not passed.

In a case that the first message does not carry the sequence number of the packet on which the integrity protection verification has failed or has not passed, the sending end may resend all sent packets. In a case that the first message carries the sequence number of the packet on which the integrity protection verification has failed or has not passed, the sending end may resend only the packet corresponding to the sequence number, to reduce data retransmission resources.

In conclusion, this embodiment of this application provides the data processing method. In a case of not performing integrity protection on all parts of the packet, the sending end may indicate the integrity protection status of the packet to the receiving end through encryption or by using the first indication that is both encrypted and integrity protected. The attacker cannot determine whether the first packet is integrity protected, nor can determine integrity-protected data content, and can only randomly tamper with the obtained packet. In this embodiment of this application, difficulty in tampering with the packet is increased. In addition, once the attacker has tampered with the packet, the receiving end can identify a tampered packet by performing decryption and/or integrity protection verification on the first indication and by performing integrity protection verification on the first packet, to reduce computing overheads for encryption and/or integrity protection of the sending end while ensuring data transmission security.

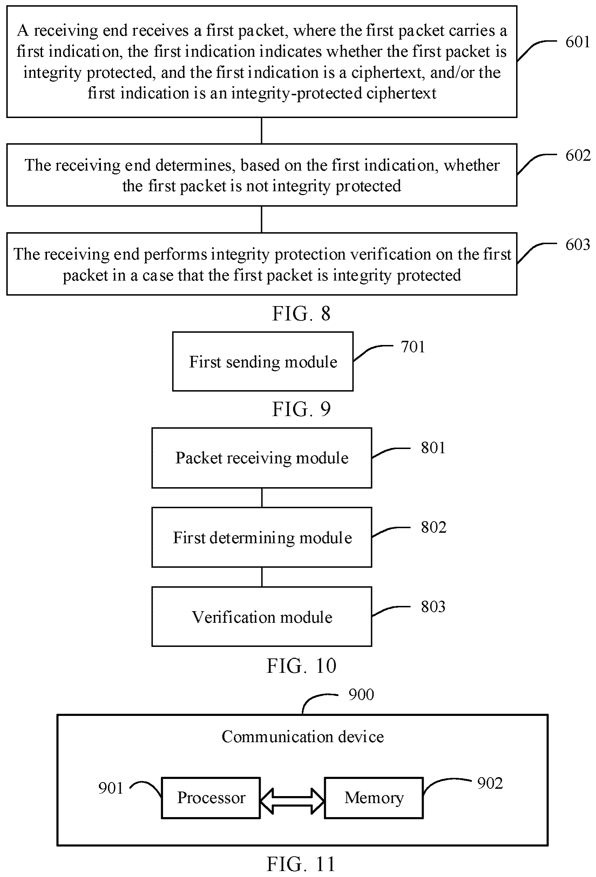

According to a second aspect, an embodiment of this application provides another data processing method. FIG. 8 is a flowchart of a data processing method according to an embodiment of this application. This method is applied to a terminal device. As shown in FIG. 8, the method may specifically include the following steps.

Step 601: A receiving end receives a first packet, where the first packet carries a first indication, the first indication indicates whether the first packet is integrity protected, and the first indication is a ciphertext, or the first indication is an integrity-protected ciphertext.

Step 602: The receiving end determines, based on the first indication, whether the first packet is not integrity protected.

Step 603: The receiving end performs integrity protection verification on the first packet in a case that the first packet is integrity protected.

It should be noted that, the sending end in this application may be a terminal device, or may be a network-side device. Specifically, in a case that the sending end is a terminal device, the receiving end is a network-side device; or in a case that the sending end is a network-side device, the receiving end is a terminal device.

In this embodiment of this application, an X field may be introduced to a header of a packet. The X field includes a first indication, and the first indication indicates whether the first packet is integrity protected. In addition, the first indication in the X field may be encrypted, or the first indication in the X field may be integrity protected and encrypted.

Further, the sending end may perform integrity protection on a payload (payload) in the first packet, and inform the receiving end, by using the first indication, whether the payload part of the packet is integrity protected.

After receiving the first packet, the receiving end determines, based on the first indication, whether the first packet is integrity protected, and performs integrity protection verification on the first packet in a case that the first packet is integrity protected.

In a possible application scenario, a processing process between a sending end and a receiving end is as follows:
1. The sending end determines that integrity protection ("integrity protection" for short below) needs to be performed on a PDCP SDU, adds a PDCP header, sets an X field, and generates MAC-I.
2. The sending end encrypts a relevant field in the PDCP PDU. The encrypted part includes the X field, and optionally, includes one or more of a payload/a part of the PDCP SDU (other than an SDAP header/SDAP control PDU), MAC-I, and the like, and is used as an input plaintext for encryption.
3. The receiving end decrypts the X field, determines, based on a value of the X field, whether the PDCP SDU in the PDCP PDU is integrity protected, and performs integrity protection verification ("integrity protection verification" for short below) on the integrity-protected part.

In a case that the X field is integrity protected, and an attacker tampers with the X field or generates the X field by the attacker, the receiving end detects the case.

It may be understood that, in a case that the sending end performs integrity protection on any part (including the payload or the X field) of the first packet, the first packet may include the MAC-I. Usually, the MAC-I is in the trailer of the first packet. Without a decryption key, the attacker cannot decrypt the X field. Therefore, the attacker cannot know whether the payload part of the packet is integrity protected, and can only randomly tamper with the monitored packet. In a case that the integrity-protected part of the integrity-protected packet is just tampered with, after the receiving end receives the integrity-protected packet, the integrity protection check fails, so that the attacker is identified, and a corresponding operation is performed, for example, notifying the sending end to resend the tampered packet, or notifying the sending end to lower a sending speed, to ensure that 100% integrity protection is performed on all packets, and the like.

According to the data processing method provided in this embodiment of this application, the sending end may protect the packet from being tampered without performing integrity protection on all sent packets, to facilitate the receiving end to identify the tampered packet, and reduce computing overheads for encryption and/or integrity protection of the sending end while ensuring data transmission security.

Optionally, the first packet is a packet generated based on first configuration information, and the first configuration information includes at least one of the following:
a second indication, where the second indication indicates a configuration ratio of an integrity-protected packet in packets corresponding to a preset sending window of the sending end;
a third indication, where the third indication indicates a format of the first packet; or
a fourth indication, where the fourth indication indicates whether to perform integrity protection on the first indication.

It should be noted that, the configuration ratio includes a quantity ratio and/or a data volume ratio. The quantity ratio = a quantity of integrity-protected packets/a quantity of packets corresponding to a preset sending window of the sending end. The packets sent by the sending end in the preset window include an integrity-protected packet and a packet that is not integrity-protected. For example, in a case that a ratio of a quantity of integrity-protected packets in the packets corresponding to the preset sending window is 30%, each time the sending end sends 100 packets, integrity protection needs to be performed on (at least) 30 packets. The data volume ratio = a sum of data volumes of integrity-protected packets/a sum of data volumes of the packets corresponding to the preset sending window. For example, in a case that a data volume ratio of integrity-protected packets in the packets corresponding to the preset sending window is 30%, each time the sending end sends a packet of 100M bytes, integrity protection needs to be performed on the packet of (not less than) 30M bytes.

The third indication indicates a format of the first packet, for example, a format of a PDCP PDU. For example, a length of the X field may be set, and different lengths of the X field result in different formats of the packet.

It may be understood that, the first configuration information may be configured by one of the sending end and the receiving end, or may be negotiated by the sending end and the receiving end. In an example, the terminal device is a sending end, and the network-side device is a receiving end. The network-side device generates the first configuration information and sends the first configuration information to the terminal device. The terminal device generates and sends the first packet based on the received first configuration information. Alternatively, the terminal device is a receiving end, and the network-side device is a sending end. The network-side device generates the first configuration information, then generates the first packet based on the first configuration information, and sends the first packet to the terminal device. After receiving the first configuration information and the first packet, the terminal device performs integrity protection verification and/or decryption on the received first packet.

For example, in a case that it is determined through negotiation or configuration that "the X field needs to be integrity protected" (that is, the first indication needs to be integrity protected), and the attacker generates a forged packet with SN = M, and it indicates in the X field that the payload of the packet does not need to be integrity protected, the receiving end may perform integrity protection verification on the X field, to identify that the packet is not generated by a real sending end or is tampered with after being generated, and perform a corresponding operation.

Optionally, the first indication indicates whether the first packet is integrity protected, including at least one of the following that:
the first indication indicates whether a payload of the first packet is encrypted; or
the first indication indicates whether a payload of the first packet is integrity protected.

In an embodiment of this application, a value of the first indication indicates whether the payload of the first packet is encrypted, not encrypted, integrity protected, not integrity protected, encrypted and integrity protected, not encrypted and not integrity protected, or the like.

Optionally, a data length of the first indication is N bits, the first indication has M values, M = 2^{N} bits, and N is a positive integer and N is greater than or equal to 1; and
in a case that a value of the first indication is a first preset value, the first indication indicates that the first packet is integrity protected, and the first preset value includes any one of (M-1) preset values of the first indication; or
in a case that a value of the first indication is a second preset value, the first indication indicates that the first packet is not integrity protected, and the second preset value is one preset value in the M values of the first indication.

It is assumed that the data length of the first indication is 1 bit, the ciphertext generated after encrypting the first indication may still be 1 bit. In a case that an attacker has tampered with the encrypted first indication, for example:
Step 1: The sending end sets the first indication to 0, indicating that integrity protection is required, and calculates MAC-I;
Step 2: The sending end encrypts the first indication. After encryption, the first indication takes a value of 1;
Step 3: The attacker has tampered with the first indication and changed the encrypted first indication to 0; and
Step 4: The receiving end decrypts the tampered first indication and obtains the original value of the tampered first indication as 1.

In this case, the receiving end mistakenly considers that the sending end has not performed integrity protection on the packet, decrypts the packet (it is assumed herein that the packet needs to be encrypted based on an existing mechanism), and directly submits the decrypted packet to a higher layer. That is, the receiving end does not detect the tampered packet.

To avoid this case, the data length of the first indication may be extended to N bits (for example, N = 4). Only one preset value (for example, 0000) represents that integrity protection is not performed; and other 15 values all represent that integrity protection is performed.

In a case that the attacker has tampered with the encrypted first indication, there is only a 1/16 (that is, 1/2^{N}) probability that the tampered first indication indicates that the packet is not integrity protected, to reduce the probability that the receiving end fails to detect the tampered packet.

In a case that the attacker has tampered with the encrypted first indication, the receiving end has a 15/16 probability of detecting the tampered first indication indicating that the packet is integrity protected. In this way, the receiving end can detect that the packet has been tampered with.

Alternatively, the first indication is extended to N bits (for example, N = 4). Only one preset value (for example, 0000) represents that integrity protection is not performed; only one preset value (for example, 1111) represents that integrity protection is performed; and other 14 values all represent that the packet is tampered with (or are non-expected values).

In a case that the attacker has tampered with the encrypted first indication, there is only a 1/16 (that is, 1/2^{N}) probability that the tampered first indication indicates that the packet is not integrity protected, to reduce the probability that the receiving end fails to detect the tampered packet.

In a case that the attacker has tampered with the encrypted first indication, the receiving end has a 14/16 (that is, (2^{N}-2)/2^{N}) probability of detecting that the tampered first indication is an invalid value, representing the tampered value.

In this case, the attacker has tampered with the encrypted first indication, and there is only 1/16 (that is, 1/2^{N}) probability that the tampered first indication just indicates that the packet is integrity protected. In this case, the receiving end can determine that the packet has been tampered with through MAC-I verification.

In a case that the first indication is integrity protected, even if the first indication is 1 bit, any tampering may still be found. Therefore, in a case that the first indication is integrity protected, the data length of the first indication does not need to be extended.

Optionally, before receiving the first packet by the receiving end, the method further includes: sending, by the receiving end, a second information to the sending end, where
the second information is used for generating the first configuration information; and the second information includes at least one of the following:
a first parameter, where the first parameter indicates an integrity protection capability of the sending end;
a second parameter, where the second parameter indicates an integrity protection verification capability of the sending end;
a third parameter, where the third parameter indicates an encryption capability of the sending end; or
a fourth parameter, where the fourth parameter indicates a decryption capability of the sending end.

In this embodiment of this application, the sending end and the receiving end may negotiate to configure the first configuration information. For example, the terminal device is a sending end, and the network-side device is a receiving end. The terminal device may notify the network-side device of sending capability information of the terminal device by sending the second information, including at least one of an integrity protection capability, an integrity protection verification capability, an encryption capability, and a decryption capability. The network-side device generates the first configuration information based on the second information, and sends the first configuration information to the terminal device. The terminal device generates and sends the first packet based on the first configuration information.

Optionally, the method further includes: sending, by the receiving end, a first message to the sending end when the integrity protection verification on the first packet fails; and the first message is used for indicating that the integrity protection verification on the first packet fails or the integrity protection verification fails.

In this embodiment of this application, the receiving end performs integrity protection verification on the packet received by the receiving end, and sends the first message to the sending end in a case that the integrity protection verification on the packet has failed or has not passed, to notify a packet on which the integrity protection verification has failed or has not passed. The sending end may resend, after receiving the first message, the packet on which the integrity protection verification has failed or has not passed, and/or lower a sending speed of the packet, perform integrity protection on all other to-be-sent packets, or the like.

Optionally, the first message carries a sequence number of the packet on which the integrity protection verification has failed or has not passed.

Optionally, the method further includes: determining, by the receiving end, that the integrity protection verification on the first packet has not passed in a case that a first condition is met.
the first condition includes at least one of the following that:
a plaintext obtained through decryption on the first indication by the receiving end is an invalid value;
the first indication fails to pass the integrity protection verification;
target data including the first indication included in the first packet fails to pass the integrity protection verification; or
a plaintext obtained through decryption on the first indication by the receiving end indicates that the first packet is integrity protected, and the first packet fails to pass the integrity protection verification.

According to the data processing method provided in this embodiment of this application, the sending end may protect the packet from being tampered without performing integrity protection on all to-be-sent packets, to facilitate the receiving end to identify a tampered packet, and reduce computing overheads for encryption and/or integrity protection of the sending end while ensuring data transmission security.

The data processing method according to embodiments of this application may be performed by a data processing apparatus. In embodiments of this application, the data processing apparatus according to embodiments of this application is described by using an example in which the data processing apparatus performs the data processing method.

According to a third aspect, an embodiment of this application provides a data processing apparatus. FIG. 9 is a block diagram of a structure of a data transmission apparatus according to an embodiment of this application. The apparatus may be used in a terminal device or a network-side device. As shown in FIG. 9, the apparatus may specifically include:
a first sending module 701, configured to send a first packet to a receiving end, where the first packet carries a first indication, the first indication indicates whether the first packet is integrity protected, and the first indication is a ciphertext, or the first indication is an integrity-protected ciphertext.

Optionally, the apparatus further includes:
a first generation module, used for generating the first packet based on first configuration information, where
the first configuration information includes at least one of the following:
   a second indication, where the second indication indicates a configuration ratio of an integrity-protected packet in packets corresponding to a preset sending window of the sending end;
   a third indication, where the third indication indicates a format of the first packet; or
   a fourth indication, where the fourth indication indicates whether to perform integrity protection on the first indication.

Optionally, a protocol stack/protocol layer of the sending end includes a higher layer and a target protocol layer, the target protocol layer is used for setting the first indication, and the higher layer is a protocol layer above the target protocol layer in the protocol stack/protocol layer of the sending end.

Optionally, the apparatus further includes:
a second generation module, configured to generate a first message authentication code based on an input parameter of a to-be-protected packet;
a third generation module, configured to generate a second packet based on the first message authentication code, the first indication, and the packet; and
an encryption module, configured to perform encryption processing on a first parameter of the second packet, to obtain the first packet, where
the first parameter includes at least one of the following:
   the first indication;
   a payload of the second packet; or
   the first message authentication code.

Optionally, the first indication indicates whether the first packet is integrity protected, including at least one of the following that:
the first indication indicates whether a payload of the first packet is encrypted; or
the first indication indicates whether a payload of the first packet is integrity protected.

Optionally, a data length of the first indication is N bits, the first indication has M values, M = 2^{N}, and N is a positive integer and N is greater than 1; and
in a case that a value of the first indication is a first preset value, the first indication indicates that the first packet is integrity protected, and the first preset value includes any one of (M-1) preset values of the first indication; or
in a case that a value of the first indication is a second preset value, the first indication indicates that the first packet is not integrity protected, and the second preset value is one preset value in the M values of the first indication.

Optionally, the apparatus further includes:
a second sending module, configured to send a second information to the receiving end; and
a first receiving module, configured to receive the first configuration information sent by the receiving end, where
the first configuration information is generated based on the second information; and
the second information includes at least one of the following:
   a first parameter, where the first parameter indicates an integrity protection capability of the sending end;
   a second parameter, where the second parameter indicates an integrity protection verification capability of the sending end;
   a third parameter, where the third parameter indicates an encryption capability of the sending end; or
   a fourth parameter, where the fourth parameter indicates a decryption capability of the sending end.

Optionally, the apparatus further includes:
a second receiving module, configured to receive a first message, where the first message indicates that the integrity protection verification on the first packet has failed or has not passed;
a third sending module, configured to resend the first packet to the receiving end; and/or
an adjusting module, configured to adjust a sending speed of the packet and perform integrity protection on another to-be-sent packet.

Optionally, the first message carries a sequence number of the packet on which the integrity protection verification has failed or has not passed.

According to a fourth aspect, an embodiment of this application provides another data processing apparatus. FIG. 10 is a block diagram of a structure of a data transmission apparatus according to an embodiment of this application. The apparatus may be used in a network-side device or a terminal device. As shown in FIG. 10, the apparatus may specifically include:
a packet receiving module 801, configured to receive a first packet, where the first packet carries a first indication, the first indication indicates whether the first packet is integrity protected, and the first indication is a ciphertext, or the first indication is an integrity-protected ciphertext;
a first determining module 802, configured to determine, based on the first indication, whether the first packet is not integrity protected; and
a verification module 803, configured to perform integrity protection verification on the first packet in a case that the first packet is integrity protected.

Optionally, the first packet is a packet generated based on first configuration information, and the first configuration information includes at least one of the following:
a second indication, where the second indication indicates a configuration ratio of an integrity-protected packet in packets corresponding to a preset sending window of the sending end;
a third indication, where the third indication indicates a format of the first packet; or
a fourth indication, where the fourth indication indicates whether to perform integrity protection on the first indication.

Optionally, the first indication indicates whether the first packet is integrity protected, including at least one of the following that:
the first indication indicates whether a payload of the first packet is encrypted; or
the first indication indicates whether a payload of the first packet is integrity protected.

Optionally, a data length of the first indication is N bits, the first indication has M values, M = 2^{N} bits, and N is a positive integer and N is greater than 1; and
in a case that a value of the first indication is a first preset value, the first indication indicates that the first packet is integrity protected, and the first preset value includes any one of (M-1) preset values of the first indication; or
in a case that a value of the first indication is a second preset value, the first indication indicates that the first packet is not integrity protected, and the second preset value is one preset value in the M values of the first indication.

Optionally, the apparatus further includes:
an information sending module, configured to send a second information to the sending end, where
the second information is used for generating the first configuration information; and the second information includes at least one of the following:
a first parameter, where the first parameter indicates an integrity protection capability of the sending end;
a second parameter, where the second parameter indicates an integrity protection verification capability of the sending end;
a third parameter, where the third parameter indicates an encryption capability of the sending end; or
a fourth parameter, where the fourth parameter indicates a decryption capability of the sending end.

Optionally, the apparatus further includes:
a message sending module, configured to send a first message to the sending end in a case that the first packet fails to pass the integrity protection verification, where the first message indicates that the integrity protection verification on the first packet has failed or has not passed.

Optionally, the first message carries a sequence number of the packet on which the integrity protection verification has failed or has not passed.

Optionally, the apparatus further includes:
a second determining module, configured to determine that the integrity protection verification on the first packet has not passed in a case that a first condition is met, where
the first condition includes at least one of the following that:
   a plaintext obtained through decryption on the first indication by the receiving end is an invalid value;
   the first indication fails to pass the integrity protection verification;
   target data including the first indication included in the first packet fails to pass the integrity protection verification; or
   a plaintext obtained through decryption on the first indication by the receiving end indicates that the first packet is integrity protected, and the first packet fails to pass the integrity protection verification.

The data processing apparatus in embodiments of this application may be an electronic device, for example, an electronic device with an operating system, or may be a component in an electronic device, for example, an integrated circuit or a chip. The electronic device may be a terminal device. For example, the terminal device may include, but is not limited to, the type of the terminal device 11 listed above.

The data processing apparatus provided in this embodiment of this application may implement all processes implemented in the method embodiment in FIG. 5 to FIG. 8, and the same technical effects are achieved. Details are not described herein again to avoid repetition.

Optionally, as shown in FIG. 11, an embodiment of this application further provides a communication device 900, including a processor 901 and a memory 902. The memory 902 stores a program or instructions executable on the processor 901. For example, in a case that the communication device 900 is a network-side device, when the program or the instructions are executed by the processor 901, all steps of the data processing method in embodiments according to the first aspect are implemented, and the same technical effects can be achieved. In a case that the communication device 900 is a terminal device, when the program or the instructions are executed by the processor 901, all step of the data processing method in embodiments according to the second aspect are implemented, and the same technical effects can be achieved. Details are not described herein again to avoid repetition.

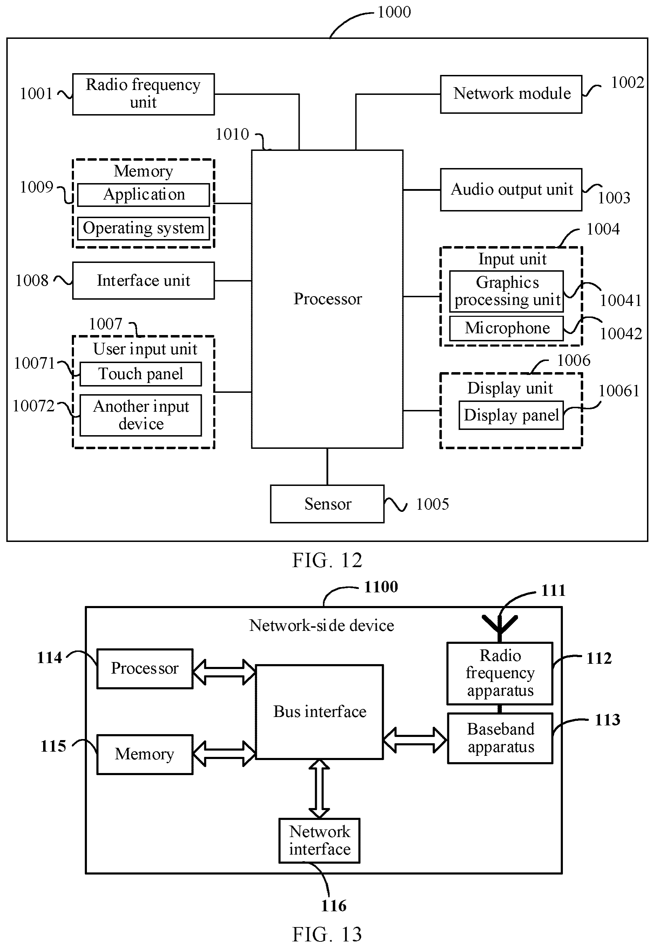

FIG. 12 is a diagram of a hardware structure of a terminal device according to an embodiment of this application.

The terminal device 1000 includes, but is not limited to, at least some of components of a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

It can be understood by a person skilled in the art that the terminal device 1000 may further include a power supply (such as a battery) for supplying power to various components. The power supply may be logically connected to the processor 1010 by using a power management system, so as to achieve charging, discharging, power consumption management and other functions by using the power management system. The terminal device structure shown in FIG. 12 does not constitute a limitation on the terminal device. The terminal device may include more or fewer components than those shown, or combine some components, or have different component arrangements. Details are not described herein again.

It should be understood that, in this embodiment of this application, the input unit 1004 may include a graphics processing unit (Graphics Processing Unit, GPU) 10041 and a microphone 10042. The graphics processing unit 10041 performs processing on image data of a static image or a video that is obtained by an image capture device (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is alternatively referred to as a touchscreen. The touch panel 10071 may include two parts: a touch detection apparatus and a touch controller. The another input device 10072 may include, but is not limited to, a physical keyboard, a function button (for example, a volume control button, a power button, or the like), a trackball, a mouse, and a joystick. Details are not described herein again.

In this embodiment of this application, the radio frequency unit 1001 receives downlink data from a network-side device and then transmits the data to the processor 1010 for processing. In addition, the radio frequency unit 1001 may send uplink data to the network-side device. Generally, the radio frequency unit 1001 includes, but is not limited to, an antenna, an amplifier, a transceiver, a coupler, a low noise amplifier, a duplexer, and the like.

The memory 1009 may be configured to store a software program or instructions and various data. The memory 1009 may mainly include a first storage area for storing the program and the instructions and a second storage area for storing the data. The first storage area may store an operating system, an application or instructions required by at least one function (for example, a sound playback function, an image display function, and the like), and the like. In addition, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1009 in this embodiment of this application includes, but is not limited to, these memories and any memory of another proper type.

The processor 1010 may include one or more processing units. Optionally, the processor 1010 integrates an application processor and a modem processor. The application processor mainly processes operations related to an operating system, a user interface, an application, and the like. The modem processor mainly processes wireless communication signals, and is, for example, a baseband processor. It may be understood that, the foregoing modem processor may not be integrated into the processor 1010.

In an optional embodiment of this application, the terminal device shown in FIG. 12 is a sending end, and the radio frequency unit 1001 is configured to send a first packet to a receiving end, where the first packet carries a first indication, the first indication indicates whether the first packet is integrity protected, and the first indication is a ciphertext, or the first indication is an integrity-protected ciphertext.

Optionally, the processor 1010 is configured to generate the first packet based on first configuration information, where
the first configuration information includes at least one of the following:
a second indication, where the second indication indicates a configuration ratio of an integrity-protected packet in packets corresponding to a preset sending window of the sending end;
a third indication, where the third indication indicates a format of the first packet; or
a fourth indication, where the fourth indication indicates whether to perform integrity protection on the first indication.

Optionally, a protocol stack/protocol layer of the sending end includes a higher layer and a target protocol layer, the target protocol layer is used for setting the first indication, and the higher layer is a protocol layer above the target protocol layer in the protocol stack/protocol layer of the sending end.

Optionally, the first indication indicates that the first packet is integrity protected. The processor 1010 is further configured to:
generate a first message authentication code based on an input parameter of a to-be-protected packet;
generate a second packet based on the first message authentication code, the first indication, and the packet; and
perform encryption processing on a first parameter of the second packet, to obtain the first packet, where
the first parameter includes at least one of the following:
   the first indication;
   a payload of the second packet; or
   the first message authentication code.

Optionally, the first indication indicates whether the first packet is integrity protected, including at least one of the following that:
the first indication indicates whether a payload of the first packet is encrypted; or
the first indication indicates whether a payload of the first packet is integrity protected.

Optionally, a data length of the first indication is N bits, the first indication has M values, M = 2N, and N is a positive integer and N is greater than 1; and
in a case that a value of the first indication is a first preset value, the first indication indicates that the first packet is integrity protected, and the first preset value includes any one of (M-1) preset values of the first indication; or
in a case that a value of the first indication is a second preset value, the first indication indicates that the first packet is not integrity protected, and the second preset value is one preset value in the M values of the first indication.

Optionally, the radio frequency unit 1001 is further configured to:
send a second information to the receiving end; and
receive the first configuration information sent by the receiving end, where
the first configuration information is generated based on the second information; and
the second information includes at least one of the following:
   a first parameter, where the first parameter indicates an integrity protection capability of the sending end;
   a second parameter, where the second parameter indicates an integrity protection verification capability of the sending end;
   a third parameter, where the third parameter indicates an encryption capability of the sending end; or
   a fourth parameter, where the fourth parameter indicates a decryption capability of the sending end.

Optionally, the radio frequency unit 1001 is further configured to:
receive a first message, where the first message indicates that the integrity protection verification on the first packet has failed or has not passed;
resend the first packet to the receiving end; and/or
the processor 1010 is configured to: adjust a sending speed of the packet and perform integrity protection on another to-be-sent packet.

Optionally, the first message carries a sequence number of the packet on which the integrity protection verification has failed or has not passed.

In another optional embodiment of this application, the terminal device shown in FIG. 12 is a receiving end, and the radio frequency unit 1011 is configured to receive a first packet, where the first packet carries a first indication, the first indication indicates whether the first packet is integrity protected, and the first indication is a ciphertext, or the first indication is an integrity-protected ciphertext.

The processor 1010 is configured to determine, based on the first indication, whether the first packet is not integrity protected; and perform integrity protection verification on the first packet in a case that the first packet is integrity protected.

Optionally, the first packet is a packet generated based on first configuration information, and the first configuration information includes at least one of the following:
a second indication, where the second indication indicates a configuration ratio of an integrity-protected packet in packets corresponding to a preset sending window of the sending end;
a third indication, where the third indication indicates a format of the first packet; or
a fourth indication, where the fourth indication indicates whether to perform integrity protection on the first indication.

Optionally, the first indication indicates whether the first packet is integrity protected, including at least one of the following that:
the first indication indicates whether a payload of the first packet is encrypted; or
the first indication indicates whether a payload of the first packet is integrity protected.

Optionally, a data length of the first indication is N bits, the first indication has M values, M = 2N bits, and N is a positive integer and N is greater than 1; and
in a case that a value of the first indication is a first preset value, the first indication indicates that the first packet is integrity protected, and the first preset value includes any one of (M-1) preset values of the first indication; or
in a case that a value of the first indication is a second preset value, the first indication indicates that the first packet is not integrity protected, and the second preset value is one preset value in the M values of the first indication.

Optionally, the radio frequency unit 1001 is further configured to:
send a second information to the sending end, where
the second information is used for generating the first configuration information;
and the second information includes at least one of the following:
a first parameter, where the first parameter indicates an integrity protection capability of the sending end;
a second parameter, where the second parameter indicates an integrity protection verification capability of the sending end;
a third parameter, where the third parameter indicates an encryption capability of the sending end; or
a fourth parameter, where the fourth parameter indicates a decryption capability of the sending end.

Optionally, the radio frequency unit 1001 is further configured to:
send a first message to the sending end in a case that the first packet fails to pass the integrity protection verification, where the first message indicates that the integrity protection verification on the first packet has failed or has not passed.

Optionally, the first message carries a sequence number of the packet on which the integrity protection verification has failed or has not passed.

Optionally, the processor 1010 is further configured to:
determine, by the receiving end, that the integrity protection verification on the first packet has not passed in a case that a first condition is met, where
the first condition includes at least one of the following that:
   a plaintext obtained through decryption on the first indication by the receiving end is an invalid value;
   the first indication fails to pass the integrity protection verification;
   target data including the first indication included in the first packet fails to pass the integrity protection verification; or
   a plaintext obtained through decryption on the first indication by the receiving end indicates that the first packet is integrity protected, and the first packet fails to pass the integrity protection verification.

An embodiment of this application further provides a network-side device. As shown in FIG. 13, the network-side device 1100 includes: an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information through the antenna 111 and sends the received information to the baseband apparatus 113 for processing. In a downlink direction, the baseband apparatus 113 processes to-be-sent information and sends the information to the radio frequency apparatus 112, and the radio frequency apparatus 112 processes the received information and sends the information through the antenna 111.

The method performed by the network-side device in the foregoing embodiment may be implemented in the baseband apparatus 113. The baseband apparatus 113 includes a baseband processor.

The baseband apparatus 113 may include, for example, at least one baseband board, and a plurality of chips are disposed on the baseband board. As shown in FIG. 11, one of the chips is, for example, the baseband processor, connected to the memory 115 through a bus interface, to invoke a program in the memory 115, and perform an operation performed by the network device shown in the foregoing method embodiment.

The network-side device may further include a network interface 116. The interface is, for example, a common public radio interface (common public radio interface, CPRI).

Specifically, the network-side device 1100 in this embodiment of this application further includes: instructions or a program stored in the memory 115 and run on the processor 114. The processor 114 invokes the instructions or the program in the memory 115, to perform the methods performed by the modules shown in FIG. 9 or FIG. 10, and the same technical effects are achieved. Details are not described herein again to avoid repetition.

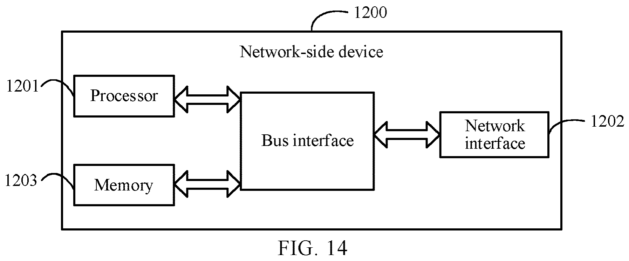

An embodiment of this application further provides a network-side device. As shown in FIG. 14, the network-side device 1200 includes: a processor 1201, a network interface 1202, and a memory 1203. The network interface 1202 is, for example, a common public radio interface (common public radio interface, CPRI).

Specifically, the network-side device 1200 in this embodiment of this application further includes: instructions or a program stored in the memory 1203 and run on the processor 1201. The processor 1201 invokes the instructions or the program in the memory 1203, to perform the methods performed by the modules shown in FIG. 9 or FIG. 10, and the same technical effects are achieved. Details are not described herein again to avoid repetition.

An embodiment of this application further provides a readable storage medium. The readable storage medium stores a program or instructions, and in a case that the program or the instructions are executed by a processor, all processes of the data processing method in embodiments are implemented, and the same technical effects can be achieved. Details are not described herein again to avoid repetition.

The processor is a processor in the terminal device described in the foregoing embodiments. The readable storage medium includes a computer-readable storage medium, for example, a computer read-only memory ROM, a random access memory RAM, a magnetic or an optical disc, or the like.

An embodiment of this application further provides a chip. The chip includes a processor and a communication interface. The communication interface is coupled to the processor, and the processor is configured to run a program or instructions, to implement all processes of the data processing method in embodiments, and the same technical effects can be achieved. Details are not described herein again to avoid repetition.

It should be understood that, the chip in this embodiment of this application may alternatively be referred to as a system-level chip, a system chip, a chip system, a system-on-chip, or the like.

An embodiment of this application further provides a computer program/program product. The computer program/program product is stored in a storage medium. The computer program/program product is executed by at least one processor, to implement all processes of the data processing method in embodiments, and the same technical effects can be achieved. Details are not described herein again to avoid repetition.

An embodiment of this application provides a data processing system, including a terminal device and a network-side device. The network-side device may be configured to perform steps of the data processing method according to the first aspect, and the terminal device may be configured to perform steps of the data processing method according to the second aspect; or the network-side device may be configured to perform steps of the data processing method according to the second aspect, and the terminal device may be configured to perform steps of the data processing method according to the first aspect.

It should be noted that, the terms "include", "comprise", or any other variation thereof in this specification is intended to cover a non-exclusive inclusion, so that a process, a method, an article, or an apparatus that includes a list of elements not only includes those elements but also includes other elements that are not expressly listed, or further includes elements inherent to such a process, a method, an article, or an apparatus. An element preceded by "includes a" does not, without more constraints, preclude the presence of additional identical elements in the process, the method, the article, or the apparatus that includes the element. In addition, it should be noted that, scopes of the method and the apparatus in the implementations of this application are not limited to performing functions in an order shown or discussed, but may include performing functions in a substantially concurrent manner or in reverse order depending on functionality involved. For example, the methods described may be performed in an order different from that described, and various steps may alternatively be added, omitted, or combined. In addition, features described with reference to some examples may alternatively be combined in another example.

According to the descriptions of the foregoing implementations, a person skilled in the art may clearly understand that the method according to the foregoing embodiment may be implemented by software in addition to necessary universal hardware platform, or by using hardware. In many cases, the former is a better implementation. Based on such an understanding, the technical solutions of this application essentially or the part contributing to the conventional technology may be implemented in a form of a computer software product. The computer software product is stored in a storage medium (such as a ROM/RAM, a magnetic disk, or an optical disc) and includes several indications for instructing a terminal (which may be a mobile phone, a computer, a server, an air conditioner, a network device, or the like) to perform the methods described in embodiments of this application.

Embodiments of this application are described with reference to the accompanying drawings. This application is not limited to the specific implementations described above, and the specific implementations described above are merely examples and not limited. A person of ordinary skill in the art may also make various variations under the inspiration of this application and without departing from the purpose of this application and the protection scope of the claims, and such variations shall all fall within the protection scope of this application.

## Claims

1. A data processing method, wherein the method comprises:
sending, by a sending end, a first packet to a receiving end, wherein the first packet carries a first indication, the first indication indicates whether the first packet is integrity protected, and the first indication is a ciphertext, or the first indication is an integrity-protected ciphertext.

2. The method according to claim 1, wherein before sending, by the sending end, the first packet to the receiving end, the method further comprises:
generating, by the sending end, the first packet based on a first configuration information, wherein
the first configuration information comprises at least one of the following:
a second indication, wherein the second indication indicates a configuration ratio of an integrity-protected packet in packets corresponding to a preset sending window of the sending end;
a third indication, wherein the third indication indicates a format of the first packet; or
a fourth indication, wherein the fourth indication indicates whether to perform integrity protection on the first indication.

3. The method according to claim 1, wherein a protocol stack or a protocol layer of the sending end comprises a higher layer and a target protocol layer, the target protocol layer is used for setting the first indication, and the higher layer is a protocol layer above the target protocol layer in the protocol stack or the protocol layer of the sending end.

4. The method according to claim 1, wherein the first indication indicates that the first packet is integrity protected, and before sending, by the sending end, the first packet to the receiving end, the method further comprises:
generating, by the sending end, a first message authentication code based on an input parameter of a to-be-protected packet;
generating, by the sending end, a second packet based on the first message authentication code, the first indication, and the packet; and
performing, by the sending end, encryption processing on a first parameter of the second packet, to obtain the first packet, wherein
the first parameter comprises at least one of the following:
the first indication;
a payload of the second packet; or
the first message authentication code.

5. The method according to claim 1, wherein the first indication indicates whether the first packet is integrity protected, comprising at least one of the following that:
the first indication indicates whether a payload of the first packet is encrypted; or
the first indication indicates whether a payload of the first packet is integrity protected.

6. The method according to claim 1, wherein a data length of the first indication is N bits, the first indication has M values, M equals 2 to the power of N, and N is a positive integer and N is greater than 1; and
in a case that a value of the first indication is a first preset value, the first indication indicates that the first packet is integrity protected, and the first preset value comprises any one of (M-1) preset values of the first indication; or
in a case that a value of the first indication is a second preset value, the first indication indicates that the first packet is not integrity protected, and the second preset value is one preset value in the M values of the first indication.

7. The method according to claim 2, wherein before generating, by the sending end, the first packet based on the first configuration information, the method further comprises:
sending, by the sending end, second information to the receiving end; and
receiving, by the sending end, the first configuration information sent by the receiving end, wherein the first configuration information is generated based on the second information; and the second information comprises at least one of the following:
a first parameter, wherein the first parameter indicates an integrity protection capability of the sending end;
a second parameter, wherein the second parameter indicates an integrity protection verification capability of the sending end;
a third parameter, wherein the third parameter indicates an encryption capability of the sending end; or
a fourth parameter, wherein the fourth parameter indicates a decryption capability of the sending end.

8. The method according to claim 1, wherein the method further comprises:
receiving a first message by the sending end, wherein the first message indicates that an integrity protection verification on the first packet has failed or has not passed;
resending, by the sending end, the first packet to the receiving end; and/or
adjusting, by the sending end, a sending speed of a packet and performing integrity protection on another to-be-sent packet.

9. The method according to claim 8, wherein the first message carries a sequence number of a packet on which the integrity protection verification has failed or has not passed.

10. A data processing method, wherein the method comprises:
receiving a first packet by a receiving end, wherein the first packet carries a first indication, the first indication indicates whether the first packet is integrity protected, and the first indication is a ciphertext, or the first indication is an integrity-protected ciphertext;
determining, by the receiving end based on the first indication, whether the first packet is not integrity protected; and
performing, by the receiving end, integrity protection verification on the first packet in a case that the first packet is integrity protected.

11. The method according to claim 10, wherein the first packet is a packet generated based on a first configuration information, and the first configuration information comprises at least one of the following:
a second indication, wherein the second indication indicates a configuration ratio of an integrity-protected packet in packets corresponding to a preset sending window of the sending end;
a third indication, wherein the third indication indicates a format of the first packet; or
a fourth indication, wherein the fourth indication indicates whether to perform integrity protection on the first indication.

12. The method according to claim 10, wherein the first indication indicates whether the first packet is integrity protected, comprising at least one of the following that:
the first indication indicates whether a payload of the first packet is encrypted; or
the first indication indicates whether a payload of the first packet is integrity protected.

13. The method according to claim 10, wherein a data length of the first indication is N bits, the first indication has M values, M equals 2 to the power of N bits, and N is a positive integer and N is greater than 1; and
in a case that a value of the first indication is a first preset value, the first indication indicates that the first packet is integrity protected, and the first preset value comprises any one of (M-1) preset values of the first indication; or
in a case that a value of the first indication is a second preset value, the first indication indicates that the first packet is not integrity protected, and the second preset value is one preset value in the M values of the first indication.

14. The method according to claim 11, wherein before receiving the first packet by the receiving end, the method further comprises:
sending, by the receiving end, a second information to the sending end, wherein
the second information is used for generating the first configuration information; and the second information comprises at least one of the following:
a first parameter, wherein the first parameter indicates an integrity protection capability of the sending end;
a second parameter, wherein the second parameter indicates an integrity protection verification capability of the sending end;
a third parameter, wherein the third parameter indicates an encryption capability of the sending end; or
a fourth parameter, wherein the fourth parameter indicates a decryption capability of the sending end.

15. The method according to claim 10, wherein the method further comprises:
sending, by the receiving end, a first message to the sending end in a case that the first packet fails to pass the integrity protection verification, wherein the first message indicates that the integrity protection verification on the first packet has failed or has not passed.

16. The method according to claim 15, wherein the first message carries a sequence number of a packet on which the integrity protection verification has failed or has not passed.

17. The method according to claim 15, wherein the method further comprises:
determining, by the receiving end, that the integrity protection verification on the first packet has not passed in a case that a first condition is met, wherein
the first condition comprises at least one of the following that:
a plaintext obtained through decryption on the first indication by the receiving end is an invalid value;
the first indication fails to pass the integrity protection verification;
target data comprising the first indication comprised in the first packet fails to pass the integrity protection verification; or
a plaintext obtained through decryption on the first indication by the receiving end indicates that the first packet is integrity protected, and the first packet fails to pass the integrity protection verification.

18. A data processing apparatus, comprising:
a first sending module, configured to send a first packet to a receiving end, wherein the first packet carries a first indication, the first indication indicates whether the first packet is integrity protected, and the first indication is a ciphertext, or the first indication is an integrity-protected ciphertext.

19. A data processing apparatus, comprising:
a packet receiving module, configured to receive a first packet, wherein the first packet carries a first indication, the first indication indicates whether the first packet is integrity protected, and the first indication is a ciphertext, or the first indication is an integrity-protected ciphertext;
a first determining module, configured to determine, based on the first indication, whether the first packet is not integrity protected; and
a verification module, configured to perform integrity protection verification on the first packet in a case that the first packet is integrity protected.

20. A network-side device, comprising a processor and a memory, wherein the memory stores a program or instructions executable on the processor, and when the program or the instructions are executed by the processor, the steps of the data processing method according to any one of claims 1 to 9 are implemented, or the steps of the data processing method according to any one of claims 10 to 17 are implemented.

21. A terminal device, comprising a processor and a memory, wherein the memory stores a program or instructions executable on the processor, and when the program or the instructions are executed by the processor, the steps of the data processing method according to any one of claims 1 to 9 are implemented, or the steps of the data processing method according to any one of claims 10 to 17 are implemented.

22. A readable storage medium, wherein the readable storage medium stores a program or instructions, and when the program or the instructions are executed by a processor, the steps of the data processing method according to any one of claims 1 to 9 are implemented, or the steps of the data processing method according to any one of claims 10 to 17 are implemented.

23. A computer program product, wherein the computer program product is executed by at least one processor, to implement the data processing method according to any one of claims 1 to 9, or implement the data processing method according to any one of claims 10 to 17.

24. An electronic device, wherein the electronic device is configured to perform the data processing method according to any one of claims 1 to 9, or implement the data processing method according to any one of claims 10 to 17.

25. A chip, wherein the chip comprises a processor and a communication interface, the communication interface is coupled to the processor, and the processor is configured to run a program or instructions, to implement the data processing method according to any one of claims 1 to 9, or implement the data processing method according to any one of claims 10 to 17.
